# EUROPÄISCHE PATENTSCHRIFT

(11) **EP 3 538 811 B1**
(45) Veröffentlichungstag und Bekanntmachung des Hinweises auf die Patenterteilung: **14.04.2021**
(21) Anmeldenummer: 17801367.8
(22) Anmeldetag: 03.11.2017
(51) Int. Cl.: F16T 1/20, F01N 3/00, F16T 1/45

(54) **KONDENSATABFÜHRSYSTEM FÜR EIN ABGASMESSGERÄT**
CONDENSATE DISCHARGING SYSTEM FOR AN EXHAUST-GAS MEASURING DEVICE
SYSTÈME D'ÉVACUATION DE CONDENSAT POUR UN INSTRUMENT DE MESURE DE GAZ D'ÉCHAPPEMENT

(30) Priorität: 09.11.2016 DE 102016121441
(43) Veröffentlichungstag der Anmeldung: 18.09.2019
(73) Patentinhaber: AVL Emission Test Systems GmbH, 41460 Neuss (DE)
(72) Erfinder: DICKOW, Achim, 42555 Velbert (DE); KREFT, Norbert, 40667 Meerbusch (DE); WOIKI, Dirk, 40231 Düsseldorf (DE); BORNEMANN, Torsten, 47877 Willich (DE)
(74) Vertreter: terpatent Patentanwälte ter Smitten Eberlein-Van Hoof Rütten Daubert
(86) Internationale Anmeldenummer: PCT/EP2017/078168
(87) Internationale Veröffentlichungsnummer: WO 2018/087003

(56) Entgegenhaltungen:
- EP-A1- 1 600 685
- DE-A1- 4 134 230
- DE-A1-102006 020 292
- GB-A- 2 159 927
- US-A- 3 348 564
- US-A- 4 685 486

## Beschreibung

Die Erfindung betrifft ein Kondensatabführsystem für ein Abgasmessgerät mit einem Kondensatabscheider und einer Ablaufleitung, in der Atmosphärendruck herrscht.

Derartige Kondensatabführsysteme sind aus einer Vielzahl von Anwendungen bekannt und dienen zum Abscheiden von Wasser aus Fluiden, insbesondere zur Abführung von in Gasen vorhandenem Wasserdampf, welcher in nachfolgenden Aggregaten durch Kondensation zu Schäden führen könnte.

In Abgasmessanlagen werden Kondensatabscheider zum Abscheiden von Wasser aus Probengasströmen, welche Wasser oder Wasserdampf aufweisende Abgase enthalten, eingesetzt. Bei der Verbrennung von Brennstoffen bildet sich Wasserdampf, der als Komponente im Abgasstrom enthalten ist, wobei das Fluid im Taupunkt gerade mit Wasserdampf gesättigt ist. Wird die Temperatur des Fluids unter den Taupunkt abgesenkt, kondensiert der Wasserdampf und das Kondensat liegt in der flüssigen Phase vor. Einerseits kann eine derartige Kondensation im Messgerät dazu führen, dass beispielswiese spektroskopisch arbeitende Messgeräte fehlerhafte Ergebnisse liefern, andererseits werden die Aggregate der Abgasmessanlagen verunreinigt, so dass die Lebensdauer der Messgeräte, beispielsweise durch Korrosion, reduziert wird.

Besonders wichtig ist es, die Kondensation von Wasserdampf in Messgeräten zu verhindern, welche kalt, also bei Temperaturen unterhalb des Taupunktes des Abgasgemischs arbeiten, da hier in besonderem Maße mit einer Kondensation des Wasserdampfes aus dem Probengas zu rechnen ist. Hier ist beispielsweise die Messung der Sauerstoffkonzentration mittels eines paramagnetischen Detektors zu nennen, der die magnetischen Eigenschaften des Sauerstoffs zur Bestimmung von dessen Konzentration in einem Gasstrom nutzt oder die spektroskopische Messung von Kohlenmonoxid, Kohlendioxid oder Kohlenwasserstoffen mittels des nichtdispersiven Infrarotsensors.

Die Absenkung der Fluidtemperatur unter den Taupunkt wird daher genutzt, um gezielt den Gehalt des Wasserdampfes im Abgas zu reduzieren und das Kondensat vor dem Messgerät abzuscheiden, um das Probengas zu trocknen. Hierzu wird das Probengas über einen Kühler in einen Kondensatabscheider geführt, im Kondensatabscheider das Kondensat aus dem Fluid abgeschieden und das abgeschiedene Kondensat in einen Kondensatbehälter geführt, aus dem das Kondensat mittels eines Ablassventils in zeitlichen Abständen oder kontinuierlich abgeführt werden kann.

Die DE 37 06 941 A1 offenbart einen mit Kühlung arbeitenden Kondensatabscheider. Der Kühler weist einen Behälter auf, der mit Kühlflüssigkeit ausgefüllt ist. Durch den mit Kühlflüssigkeit gefüllten Behälter verläuft eine spiralförmige Einlassleitung, die in einem Abscheidebehälter mündet und durch die das zu kühlende Fluid strömt. Der Abscheidebehälter setzt sich aus einem zylindrischen und einem daran anschließenden kegelstumpfförmigen Abschnitt zusammen, wobei der kegelstumpfförmige Abschnitt nach unten zuläuft und in einer Kondensatablauföffnung mündet. An dem der Kondensatablauföffnung gegenüberliegenden Ende des Kondensatabscheiders taucht ein Tauchrohr in den Kondensatabscheider ein, welches als Gasauslassstutzen dient und in eine Gasabführleitung mündet, über die das getrocknete Gas nachfolgenden Aggregaten zugeführt werden kann. Es wird jedoch nicht beschrieben, wie das anfallende Kondensat gezielt abgeführt werden kann. Aus der DE 10 2004 060 352 B3 ist ein Abgastester bekannt, welcher ein Messgerät aufweist, vor welcher ein Kondensatabscheider angeordnet ist. Das anfallende Kondensat wird über eine Pumpe aus dem Kondensatabscheider durch Anlegen eines Unterdrucks mittels der Pumpe abgeführt. Dies erfolgt zumeist über Schlauchpumpen, da diese pulsationsfrei arbeiten und eine vollständige Entkopplung der nachfolgenden Behälter vom Kondensatabscheider erfolgt, so dass Rückwirkungen, beispielsweise durch Druckstöße, ausgeschlossen werden können. Diese Pumpe pumpt das Kondensat in einen Kondensatbehälter, aus dem das Kondensat über ein Schwimmerventil abgelassen werden kann. Das in den Kondensatbehälter gelangende Gas kann über einen Schlauch abgeführt werden.

Zusätzlich ist aus der DE 10 2006 020 292 A1 eine Abgasanlage bekannt, in der ein Kondensator angeordnet ist und ein Zwischenspeicher angeordnet sind. Das am Kondensator anfallende Kondensat gelangt unmittelbar in den Zwischenspeicher, in dem ein Schwimmer angeordnet ist, der bei Überschreiten einer gewissen Füllhöhe einen Auslass freigibt.

Nachteilig an diesem System ist es, dass eine verschleißende und daher zu wartende Pumpe genutzt werden muss, um einerseits das Kondensat zu fördern und andererseits Rückwirkungen auf den Kondensatabscheider oder das Messgerät zu verhindern, die zu einer Verringerung des Abscheidegrades oder einer Verschlechterung der Messergebnisse, insbesondere aufgrund von Druckstößen beim Ablassen des Kondensats, führen könnten.

Es stellt sich daher die Aufgabe, ein Kondensatabführsystem für ein Abgasmessgerät derart weiterzuentwickeln, dass ohne ein zusätzliches Fördermittel eine Kondensatabtrennung erreicht wird, bei der Rückwirkungen in Form von Druckschwankungen beispielsweise beim Entleeren des Kondensatbehälters auf den Abscheider und vor allem auf die Messgeräte, die zu einer Verschlechterung des Abscheidegrades beziehungsweise der Messungen führen können, vermieden werden.

Diese Aufgabe wird durch ein Kondensatabführsystem für ein Abgasmessgerät mit den Merkmalen des Hauptanspruchs 1 gelöst.

Dadurch, dass im Kondensatabscheider Überdruck herrscht und zwischen dem Kondensatabscheider und der Ablaufleitung ein Zwischenspeicher, in dem Überdruck herrscht, angeordnet ist, der direkt über eine Verbindungsleitung mit dem Kondensatabscheider verbunden ist und in dem ein Schwimmerventil angeordnet ist, über welches Kondensat in die Ablaufleitung abführbar ist, liegt eine Entkopplung des Kondensatbehälters von der Ablaufleitung vor, die dazu führt, dass Druckstöße an der Ablaufleitung nicht auf den Kondensatabscheider und damit auch nicht auf die Messgeräte übertragen werden. Des Weiteren weist der Kondensatabscheider ein Gehäuse auf, in dem eine gekühlte Einlassleitung zum Einleiten eines Probengasstroms angeordnet ist, eine Auslassöffnung zum Abführen eines Gasstroms auf und eine Ablauföffnung zum Abführen des Kondensats auf, welche in die Verbindungsleitung zwischen dem Kondensatabscheider und dem Zwischenspeicher mündet. Das Gehäuse umgibt somit sowohl den Kühlbereich als auch den Abscheidebereich des Kondensatabscheiders. Entsprechend arbeitet der Kondensatabscheider bei konstanten Druckverhältnissen, da durch das Ventil im Zwischenspeicher der Überdruckbereich vom Atmosphärendruckbereich getrennt wird. Auf ein zusätzliches verschleißendes Fördermittel, über welches auch eine räumliche Trennung zwischen der Ablaufleitung und dem Kondensatabscheider erfolgt, kann verzichtet werden.

Zusätzlich ist es durch die erfindungsgemäße Anordnung möglich, den Kondensatabscheider besonders klein auszuführen, da auf ein Ventil im Kondensatabscheider verzichtet werden kann. Hierdurch ist das vorhandene Totvolumen am Kondensatabscheider minimiert, wodurch die Ansprechzeit im Vergleich zu bekannten Ausführungen deutlich sinkt.

Vorzugsweise ist der Zwischenspeicher in einem unteren Volumen mit Kondensat befüllt, welches über einen am unteren Volumen angeordneten Kondensatauslass abführbar ist, und in einem oberen Volumen mit Gas befüllt ist, welches über einen am oberen Volumen angeordneten Gasauslass abführbar ist. Aus diesem Zwischenspeicher kann somit in den Zwischenspeicher gelangendes Gas abgeführt werden, so dass über den Kondensatauslass ausschließlich Kondensat in den Kondensatbehälter gelangt.

In einer hierzu weiterführenden bevorzugten Ausführungsform mündet die Ablaufleitung in einen Kondensatbehälter, von dessen unteren Bereich eine Ablassleitung wegführt, in der ein Ablassventil angeordnet ist und an dessen oberen Bereich eine Entlüftungsöffnung ausgebildet ist. In diesem Kondensatbehälter kann durch die Gasabführöffnung Atmosphärendruck aufrecht erhalten werden, so dass Druckstöße beim Entleeren nicht zu Rückwirkungen auf den Zwischenspeicher führen. Das Kondensatabführsystem benötigt somit keinen ständigen Anschluss an eine Drainage, sondern kann in zeitlichen Abständen gezielt geleert werden.

Vorzugsweise ist der Gasauslass des Zwischenspeichers mit einer Strömungswiderstandsleitung, welche insbesondere als Kapillare oder Düse ausgeführt werden kann, verbunden. So kann in den Zwischenspeicher gelangendes Gas aufgrund des anliegenden Druckgefälles abgeführt werden. Rückströmungen werden vermieden.

In einer weiterführenden vorteilhaften Ausgestaltung der Erfindung ist die Kapillare oder Düse beheizt, so dass noch vorhandener Wasserdampf nicht kondensieren kann, wodurch die Kapillare beziehungsweise Düse verschmutzt würde. Entsprechend werden durch die Beheizung Ablagerungen an der Kapillare vermieden.

In einer bevorzugten Ausführung ist eine Förderpumpe stromaufwärts des Kondensatabscheiders angeordnet, wodurch der gesamte Kondensatabscheider im Überdruck arbeitet. So wird ein nachträgliches Eindringen von Feuchtigkeit in die Gasströme durch auftretende Leckagen vermieden. Auf zusätzliche Fördereinheiten kann verzichtet werden.

Auch ist es vorteilhaft, wenn der Kondensatabscheider ein Kühlmittel gekühlter Kondensatabscheider ist. Dieser weist bei zu vermessenden Abgasströmen einen sehr guten Wirkungsgrad bei der Abscheidung auf, so dass sehr gute Messergebnisse erzielt werden können.

In einer hierzu weiterführenden Ausführungsform ist das Kühlmittel ein fester Kühlkörper, der mittels eines Peltierkühlers gekühlt ist. Dies hat sich als effiziente Möglichkeit zur Kühlung herausgestellt, da keine flüssigkeitsführenden Leitungen benötigt werden.

Zusätzlich ist die Auslassöffnung des Kondensatabscheiders mit einer Probengasleitung verbunden, die die in einem Abgasmessgerät mündet, dessen Betriebstemperatur zwischen Umgebungstemperatur und 70°C liegt, so dass diesem Messgerät lediglich trockenes Probengas zur Messung zur Verfügung gestellt wird. Dies verbessert die Messergebnisse und verringert die Alterung des Messgerätes aufgrund von Ablagerungen durch Kondensation. Zumeist werden diese Messgeräte mit einer Temperatur knapp über der Umgebungstemperatur betrieben um ein Temperaturdriften zu vermeiden.

Auch ist es vorteilhaft, wenn die gekühlte Einlassleitung wendeiförmig verläuft und tangential in einen Abscheideraum mündet, an dessen Unterseite ein Trichter ausgebildet ist, der in die Ablauföffnung für das Kondensat mündet, und an dessen Oberseite ein Gasauslassstutzen ausgebildet ist, der in der Auslassöffnung mündet. Diese zyklonförmige Ausgestaltung des Kondensatabscheiders ermöglicht sehr gute Trenngrade, da ein Mitreißen der Kondensattröpfchen in Richtung der Gasauslassöffnung durch die Form und die dadurch gerichtete Abführung des Wassers vermieden wird. Auch wird Spritzwasser vermieden, welches ebenfalls zu einem Mitreißen des Wassers zur Gasauslassöffnung führen könnte. Vielmehr haftet das Kondensat an den Oberflächen und wird durch das Gefälle des Abscheideraumes in Richtung der Ablauföffnung geleitet.

Des Weiteren ist es vorteilhaft, wenn der Kondensatbehälter oberhalb des Zwischenspeichers angeordnet ist, wodurch der senkrechte benötigte Bauraum beschränkt werden kann. Dies wird durch den Betrieb im Überdruck möglich.

Es wird somit ein Kondensatabführsystem für ein Abgasmessgerät geschaffen, bei dem am Messgerät sehr gute Messergebnisse auch bei Messungen bei Umgebungstemperatur erreicht werden, da das Kondensat zuverlässig vor dem Messgerät abgeführt wird, indem hohe Abscheidegrade sichergestellt werden und Rückwirkungen auf den Kondensatabscheider zuverlässig vermieden werden. So ist auch eine kontinuierliche Nutzung des Systems möglich.

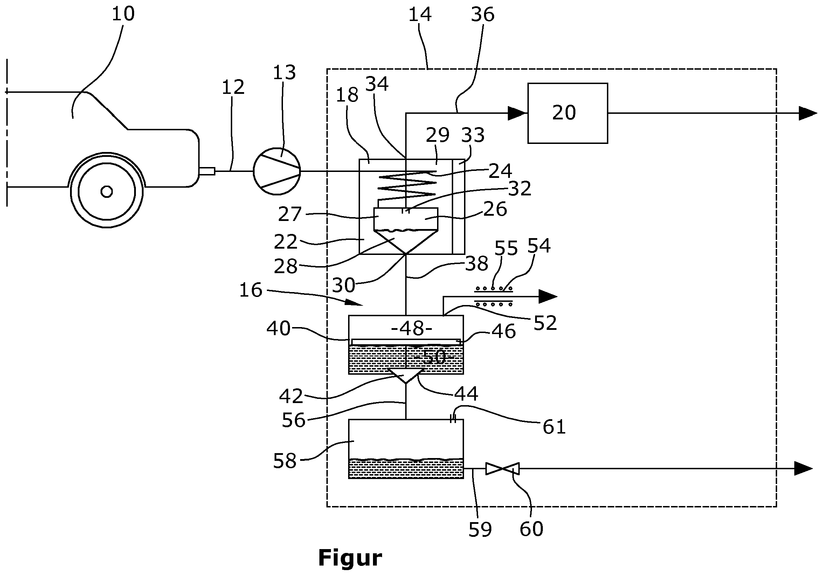

Ein Ausführungsbeispiel eines erfindungsgemäßen Kondensatabführsystems für ein Abgasmessgerät ist in der Figur schematisch dargestellt und wird nachfolgend beschrieben.

Die Figur zeigt einen Prüfstand, bei dem Abgas aus einem Fahrzeug 10 über eine Probengasleitung 12 mittels einer Förderpumpe 13 einer Abgasanalyseeinheit 14 zugeführt wird, welche stromabwärts der Förderpumpe 13 angeordnet ist. Die Abgasanalyseeinheit 14 besteht aus einem Kondensatabführsystem 16, dessen Kondensatabscheider 18 stromaufwärts eines Abgasmessgerätes 20, insbesondere eines nicht dispersiven Infrarotdetektors oder eines paramagnetischen Sauerstoffdetektors angeordnet ist, die bei Betriebstemperaturen zwischen der Umgebungstemperatur und etwa 70°C betrieben werden, so dass ohne die Verwendung des vorgeschalteten Kondensatabscheiders 18 zu befürchten wäre, dass der im warmen Abgas gelöste Wasserdampf im Infrarotdetektor auskondensieren würde oder eine erhöhte Querempfindlichkeit durch höhere Wasserdampfkonzentrationen zur Folge hätte, wodurch die Messergebnisse verfälscht würden.

Der Kondensatabscheider 18 weist ein Gehäuse 22 auf, welches eine spiralförmig verlaufende Einlassleitung 24 umgibt. Diese Einlassleitung 24 ist von einem Kühlkörper 29 umgeben, der insbesondere aus einem gut Wärme leitenden Metall besteht und großflächig an der kühlen Seite eines Peltierkühlers 33 anliegt, so dass das in die Einlassleitung 24 gelangende Fluid gekühlt wird. Diese Einlassleitung 24 mündet tangential in einen Abscheideraum 26, dessen oberer zylindrischer Gehäuseabschnitt 27 in einen unteren Trichter 28 übergeht, an dessen unterem Ende eine Ablauföffnung 30 für das abgeschiedene Kondensat ausgebildet ist und in dem Überdruck durch den Förderdruck der Förderpumpe 13 herrscht. Zentral in den oberen Gehäuseabschnitt 27 ragt ein Gasauslassstutzen 32, über den das getrocknete Probengas zu einer Auslassöffnung 34 des Kondensatabscheiders 18 gelangt und anschließend über eine mit der Auslassöffnung verbundene Probengasleitung 36 dem Abgasmessgerät 20 zugeführt wird, in welchem beispielsweise die Konzentrationen des Kohlenmonoxids, des Kohlendioxids oder der Kohlenwasserstoffe im Abgas gemessen werden.

In der Einlassleitung 24 wird somit das Probengas unter die Tautemperatur abgekühlt, wodurch ein Großteil des im Probengas enthaltenen Wasserdampfes kondensiert. Durch den Gasstrom und die Schwerkraft gelangt das Kondensat mit dem Probengas tangential in den Abscheideraum 26. Durch die tangentiale Einströmung zirkuliert das Kondensat zunächst entlang der Wandfläche des zylindrischen Gehäuseabschnitts 27. Durch die im Vergleich zum Gas höhere Masse der Kondensattropfen wirkt auf die Kondensattropfen eine höhere Fliehkraft und Schwerkraft, die dazu führen, dass die durch den Volumenstrom des Probengases mitgenommenen Kondensattropfen aus dem Probengas gelöst werden und über den Trichter 28 zur Ablauföffnung 30 gelangen, während der Probengasstrom dem Druckgefälle in Richtung des Gasauslassstutzens 32 folgt. Spritzwasser durch auf eine Oberfläche des Kondensats tropfendes Wasser, welches durch den Gasstrom mitgerissen werden könnte, wird durch den Trichter 28 verhindert. Zusätzlich kann ein Einlassquerschnitt des Gasauslassstutzens 32 größer gewählt werden, als ein Auslassquerschnitt, wodurch die Strömungsgeschwindigkeit am Eintrittsquerschnitt und damit auch die Schleppkraft des Gasstroms verringert werden.

Von der Ablauföffnung 30 strömt das Kondensat erfindungsgemäß durch den herrschenden Überdruck über eine erste Verbindungsleitung 38 in einen Zwischenspeicher 40, in dem ebenfalls Überdruck durch den Förderdruck der Förderpumpe 13 herrscht. In diesem Zwischenspeicher 40 ist ein Schwimmerventil 42 angeordnet, welches einen Kondensatauslass 44 des Zwischenspeichers 40 in Abhängigkeit des Wasserstandes freigibt oder verschließt. Dieses Schwimmerventil 42 weist ein Schwimmerglied 46 auf, welches auf der Wasseroberfläche des Zwischenspeichers 40 schwimmt, welche den Zwischenspeicher 40 in ein oberes Volumen 48, welches mit Gas gefüllt ist, welches mit dem Kondensat über die Ablauföffnung 30 aus dem Kondensatabscheider 18 abgeführt wurde und ein unteres Volumen 50, der mit dem Kondensat gefüllt ist, aufteilt.

Am oberen Volumen 48 ist ein Gasauslass 52 ausgebildet, der in eine geheizte Kapillare 54 führt, über welche das mit dem Kondensat zuvor in den Zwischenspeicher 40 gelangte Gas abgeführt werden kann. Dabei wird durch eine Heizung 55 verhindert, dass in diesem Gas gelöster Wasserdampf oder andere Verbindungen weiter kondensieren, wodurch sich Ablagerungen in der Kapillare 54 bilden würden, die zu einer Verstopfung führen könnten.

Der Kondensatauslass 44 des Zwischenspeichers 40 ist über eine Ablaufleitung 56 mit einem Kondensatbehälter 58 verbunden, in den das Kondensat abgeführt wird und in dem Atmosphärendruck herrscht. An diesem Kondensatbehälter 58 ist eine untere Ablassleitung 59 angeschlossen, in der ein Ablassventil 60 angeordnet ist, über welches das Kondensat aus der Abgasanalyseeinheit 14 abgeführt werden kann. Dieses Ablassventil 60 wird in regelmäßigen Abständen vom Bedienpersonal betätigt, um eine vollständige Füllung des Kondensatbehälters 58 zu vermeiden. Auch eine automatische oder kontinuierliche Entleerung wäre möglich. Des Weiteren ist am oberen Bereich eine mit der Atmosphäre verbundene Entlüftungsöffnung 61 ausgebildet, über die ein Druckausgleich im Kondensatbehälter 58 erfolgt, so dass auch bei geöffnetem Schwimmerventil 42 kein Druckaufbau im Kondensatbehälter 58 stattfinden kann.

Dieser Aufbau des Kondensatabführsystems 16 und insbesondere die Anordnung des Zwischenspeichers 40 ermöglicht es, das System über das Ablassventil 60 zwischen dem Kondensatbehälter 58 und dem Kondensatabscheider 18 zu entleeren während die Messung läuft, also Probengas dem Kondensatabscheider 18 und dem Abgasmessgerät 20 zugeführt wird, da keine Rückwirkungen auf den Kondensatabscheider 18 zu befürchten sind. Eine Übertragung sonst möglicher Druckstöße oder Pulsationen auf den Kondensatabscheider 18 durch das Entleeren des Kondensatbehälters 58 werden durch die Zwischenschaltung des Zwischenspeichers und die daraus folgende Entkopplung des Kondensatabscheiders von der Ablaufleitung sowie durch die Verwendung des Kondensatbehälters mit der Entlüftungsöffnung 61, vollständig ausgeschlossen. Die Abführung des Kondensats und der Gasströme erfolgt durch den Förderdruck der vorgeschalteten Förderpumpe 13. Folgende Schlauchpumpen oder Ähnliches zur Förderung und gleichzeitigen Trennung des Kondensatabscheiders 18 vom Kondensatbehälter 58 werden nicht benötigt, wodurch der Verschleiß des Kondensatabführsystems 16 verringert und die Wartungsintervalle vergrößert werden können.

Es sollte deutlich sein, dass der Schutzbereich des vorliegenden Hauptanspruchs nicht auf das beschriebene Ausführungsbeispiel begrenzt ist. Insbesondere können die Bauformen des Kondensatabscheiders, des Zwischenspeichers oder des Kondensatbehälters geändert werden. Auch ist ein solches System für verschiedene Messgeräte nutzbar.

## Patentansprüche

1. Kondensatabführsystem (16) für ein Abgasmessgerät (20) mit einem Kondensatabscheider (18)
und einer Ablaufleitung (56), in der Atmosphärendruck herrscht, Z wobei Z im Kondensatabscheider (18) Überdruck herrscht und zwischen dem Kondensatabscheider (18) und der Ablaufleitung (56) ein Zwischenspeicher (40), in dem Überdruck herrscht, angeordnet ist, der direkt über eine Verbindungsleitung (38) mit dem Kondensatabscheider (18) verbunden ist und in dem ein Schwimmerventil (42) angeordnet ist, über welches Kondensat in die Ablaufleitung (56) abführbar ist, **dadurch gekennzeichnet, dass** der Kondensatabscheider (18) ein Gehäuse (22) aufweist, in dem eine gekühlte Einlassleitung (24) zum Einleiten eines Probengasstroms angeordnet ist, eine Auslassöffnung (34) zum Abführen eines Gasstroms und eine Ablauföffnung (30) zum Abführen des Kondensates aufweist, welche in die Verbindungsleitung (38) zwischen dem Kondensatabscheider (18) und dem Zwischenspeicher (40) mündet.

2. Kondensatabführsystem (16) für ein Abgasmessgerät (20) nach Anspruch 1,
Z wobei der Zwischenspeicher (40) in einem unteren Volumen (50) mit Kondensat befüllt ist, welches über einen am unteren Volumen angeordneten Kondensatauslass (44) abführbar ist, und in einem oberen Volumen (48) mit Gas befüllt ist, welches über einen am oberen Volumen angeordneten Gasauslass (52) abführbar ist.

3. Kondensatabführsystem (16) für ein Abgasmessgerät (20) nach einem der Ansprüche 1 oder 2,
wobei die Ablaufleitung (56) in einen Kondensatbehälter (58) mündet, von dessen unteren Bereich eine Ablassleitung (59) wegführt, in der ein Ablassventil (60) angeordnet ist und an dessen oberen Bereich eine Entlüftungsöffnung (61) ausgebildet ist.

4. Kondensatabführsystem (16) für ein Abgasmessgerät (20) nach einem der Ansprüche 2 oder 3,
wobei der Gasauslass (52) des Zwischenspeichers (40) mit einer Strömungswiderstandsleitung verbunden ist.

5. Kondensatabführsystem (16) für ein Abgasmessgerät (20) nach Anspruch 4,
wobei die Strömungswiderstandsleitung eine Kapillare (54) oder eine Düse ist.

6. Kondensatabführsystem (16) für ein Abgasmessgerät (20) nach Anspruch 5,
wobei die Kapillare (54) oder Düse beheizt ist.

7. Kondensatabführsystem (16) für ein Abgasmessgerät (20) nach einem der vorhergehenden Ansprüche,
Z wobei eine Förderpumpe (13) stromaufwärts des Kondensatabscheiders (18) angeordnet ist.

8. Kondensatabführsystem (16) für ein Abgasmessgerät (20) nach einem der vorhergehenden Ansprüche,
wobei Z der Kondensatabscheider (18) ein Kühlmittel gekühlter Kondensatabscheider (18) ist.

9. Kondensatabführsystem (16) für ein Abgasmessgerät (20) nach Anspruch 8,
Z wobei Z das Kühlmittel ein fester Kühlkörper (29) ist, der mittels eines Peltierkühlers (33) gekühlt ist.

10. Kondensatabführsystem (16) für ein Abgasmessgerät (20) nach einem der vorhergehenden Ansprüche,
wobei Z die Auslassöffnung (34) des Kondensatabscheiders (18) mit einer Probengasleitung (36) verbunden ist, die in einem Abgasmessgerät (20) mündet, dessen Betriebstemperatur zwischen Umgebungstemperatur und 70°C liegt.

11. Kondensatabführsystem (16) für ein Abgasmessgerät (20) nach einem der vorhergehenden Ansprüche,
wobei Z die gekühlte Einlassleitung (24) wendeiförmig verläuft und tangential in einen Abscheideraum (26) mündet, an dessen Unterseite ein Trichter (28) ausgebildet ist, der in die Ablauföffnung (30) mündet, und an dessen Oberseite ein Gasauslassstutzen (32) ausgebildet ist, der in der Auslassöffnung (34) mündet,

12. Kondensatabführsystem (16) für ein Abgasmessgerät (20) nach einem der Ansprüche 3 bis 11,
wobei Z der Kondensatbehälter (58) oberhalb des Zwischenspeichers (40) angeordnet ist.

## Claims

1. Condensate discharge system (16) for an exhaust gas measuring device (20) comprising a condensate separator (18) and an outflow line (56) in which atmospheric pressure prevails, wherein positive pressure prevails in the condensate separator (18) and an intermediate reservoir (40), in which positive pressure prevails, is arranged between the condensate separator (18) and the outflow line (56) and is directly connected via a connecting line (38) to the condensate separator (18) and comprises a float valve (42) via which condensate can be discharged into the outflow line (56), **characterized in that** the condensate separator (18) comprises a housing (22) in which a cooled inlet line (24) is arranged for letting in a sample gas flow, an outlet opening (34) for discharging a gas flow, and an outflow opening (30) that leads into the connecting line (38) between the condensate separator (18) and the intermediate reservoir (40) for discharging the condensate.

2. Condensate discharge system (16) for an exhaust gas measuring device (20) according to claim 1, wherein the intermediate reservoir (40) is filled in a lower volume (50) with condensate, which can be discharged via a condensate outlet (44) arranged at the lower volume, and in an upper volume (48) with gas, which can be discharged via a gas outlet (52) arranged at the upper volume.

3. Condensate discharge system (16) for an exhaust gas measuring device (20) according to any one of the claims 1 or 2, wherein the outflow line (56) leads into a condensate tank (58) from whose lower area a discharge line (59) leads away in which a discharge valve (60) is arranged and at whose upper area a ventilation opening (61) is formed.

4. Condensate discharge system (16) for an exhaust gas measuring device (20) according to any one of the claims 2 or 3, wherein the gas outlet (52) of the intermediate reservoir (40) is connected to a flow resistance line.

5. Condensate discharge system (16) for an exhaust gas measuring device (20) according to claim 4, wherein the flow resistance line is either a capillary (54) or a nozzle.

6. Condensate discharge system (16) for an exhaust gas measuring device (20) according to claim 5, wherein the capillary (54) or the nozzle is heated.

7. Condensate discharge system (16) for an exhaust gas measuring device (20) according to any one of the preceding claims, wherein a feed pump (13) is arranged upstream of the condensate separator (18).

8. Condensate discharge system (16) for an exhaust gas measuring device (20) according to any one of the preceding claims, wherein the condensate separator (18) is a condensate separator cooled with a coolant.

9. Condensate discharge system (16) for an exhaust gas measuring device (20) according to claim 8, wherein the coolant is a solid heat sink cooled by means of a peltier cooler (33).

10. Condensate discharge system (16) for an exhaust gas measuring device (20) according to any one of the preceding claims, wherein the outlet opening (34) of the condensate separator (18) is connected to a sample gas line (36) that leads into an exhaust gas measuring device (20) with an operating temperature between ambient temperature and 70 °C.

11. Condensate discharge system (16) for an exhaust gas measuring device (20) according to any one of the preceding claims, wherein the cooled inlet line (24) is helically formed and tangentially leads into a separation chamber (26) on whose lower side a funnel (28) is formed that leads into the outflow opening (30) and on which upper side a gas outlet nozzle (32) is formed that leads into the outlet opening (34).

12. Condensate discharge system (16) for an exhaust gas measuring device (20) according to any one of the claims 3 to 11, wherein the condensate tank (58) is arranged above the intermediate reservoir (40).

## Revendications

1. Système d'évacuation des condensats (16) pour dispositif de mesure des gaz d'échappement (20) comprenant un séparateur de condensat (18)
et une conduite d'évacuation (56) dans laquelle règne la pression atmosphérique, dans lequel une surpression règne dans le séparateur de condensat (18), et un réservoir tampon (40), dans lequel règne une surpression, est disposé entre le séparateur de condensat (18) et la conduite de vidange (56) et est relié directement au séparateur de condensat (18) par l'intermédiaire d'une conduite de liaison (38) et dans lequel une soupape à flotteur (42) est disposé, par l'intermédiaire de laquelle le condensat peut être évacué dans la conduite de vidange (56),
**caractérisé en ce que**
le séparateur de condensat (18) comprend un carter (22) dans lequel est disposée une conduite d'entrée (24) refroidie pour introduire un écoulement de gaz échantillon, une ouverture de sortie (34) pour décharger un écoulement de gaz et une ouverture de vidange (30) pour l'évacuation le condensat, qui s'ouvre dans la conduite de liaison (38) entre le séparateur de condensat (18) et le réservoir tampon (40).

2. Système d'évacuation des condensats (16) pour dispositif de mesure des gaz d'échappement (20) selon la revendication 1, dans lequel le réservoir tampon (40) est rempli de condensat dans un volume inférieur (50), qui peut être évacué via une sortie de condensat (44) disposée au volume inférieur, et est rempli de gaz dans un volume supérieur (48) qui peut être vidé via une sortie de gaz (52) agencée au volume supérieur.

3. Système d'évacuation des condensats (16) pour dispositif de mesure des gaz d'échappement (20) selon l'une des revendications 1 ou 2, dans lequel la conduite de vidange (56) s'ouvre dans un réservoir de condensat (58), à partir de la région inférieure duquel une conduite de vidange (59) s'éloigne, dans laquelle une soupape de vidange (60) est disposée et dans la région supérieure duquel une ouverture de ventilation (61) est formée.

4. Système d'évacuation des condensats (16) pour dispositif de mesure des gaz d'échappement (20) selon l'une des revendications 2 ou 3, dans lequel la sortie de gaz (52) du réservoir tampon (40) est reliée à une conduite de résistance à l'écoulement.

5. Système d'évacuation des condensats (16) pour dispositif de mesure des gaz d'échappement (20) selon la revendication 4, dans lequel la conduite de résistance à l'écoulement est un capillaire (54) ou une buse.

6. Système d'évacuation des condensats (16) pour dispositif de mesure des gaz d'échappement (20) selon la revendication 5, dans lequel le capillaire (54) ou la buse est chauffé.

7. Système d'évacuation des condensats (16) pour dispositif de mesure des gaz d'échappement (20) selon l'une quelconque des revendications précédentes, dans lequel une pompe d'alimentation (13) est disposée en amont du séparateur de condensat (18).

8. Système d'évacuation des condensats (16) pour dispositif de mesure des gaz d'échappement (20) selon l'une quelconque des revendications précédentes, dans lequel le séparateur de condensat (18) est un séparateur de condensat (18) refroidi par un réfrigérant.

9. Système d'évacuation des condensats (16) pour dispositif de mesure des gaz d'échappement (20) selon la revendication 8, dans lequel le réfrigérant est un dissipateur thermique solide (29) refroidi par un refroidisseur Peltier (33).

10. Système d'évacuation des condensats (16) pour dispositif de mesure des gaz d'échappement (20) selon l'une quelconque des revendications précédentes, dans lequel l'ouverture de sortie (34) du séparateur de condensat (18) est reliée à une conduite de gaz d'échantillonnage (36) qui s'ouvre dans un dispositif de mesure des gaz d'échappement (20) dont la température de fonctionnement est comprise entre la température ambiante et 70° C.

11. Système d'évacuation des condensats (16) pour dispositif de mesure des gaz d'échappement (20) selon l'une quelconque des revendications précédentes, dans lequel la conduite d'entrée (24) refroidie s'étend de manière hélicoïdale et s'ouvre tangentiellement dans une chambre de séparation (26), sur la face inférieure de laquelle est formé un entonnoir (28) qui s'ouvre dans l'ouverture de vidange (30) et sur le côté supérieur duquel un tube de décharge de gaz (32) est formé, qui s'ouvre dans l'ouverture de sortie (34).

12. Système d'évacuation des condensats (16) pour dispositif de mesure des gaz d'échappement (20) selon l'une des revendications 3 à 11, dans lequel le réservoir de condensat (58) est disposé au-dessus du réservoir tampon (40).
